# EUROPEAN PATENT SPECIFICATION

(11) **EP 0 884 361 B1**
(45) Date of publication and mention of the grant of the patent: **06.11.2002**
(21) Application number: 98304050.2
(22) Date of filing: 21.05.1998
(51) Int. Cl.: C08L 55/02, C08L 51/04

(54) **Low gloss thermoplastic resin composition**
Thermoplastische Harzzusammensetzung mit geringem Glanz
Composition de résin thermoplastique à brillance réduite

(30) Priority: 12.06.1997 US 873353
(43) Date of publication of application: 16.12.1998
(73) Proprietor: GENERAL ELECTRIC COMPANY, Schenectady, NY 12345 (US)
(72) Inventor: Fukuyama, James Mitsugu, Parkersburg, West Virginia 26101 (US); Gaggar, Satish Kumar, Parkersburg, West Virginia 26101 (US)
(74) Representative: Szary, Anne Catherine, Dr.

(56) References cited:
- EP-A- 0 576 960
- US-A- 5 580 924

## Description

The present invention is directed to a thermoplastic resin composition, more particularly to a low gloss thermoplastic resin composition that exhibits resistance to heat and impact.

Compositions that comprise an acrylonitrile-butadiene-styrene resin, a polycarbonate resin and a gel copolymer and that exhibit reduced surface gloss are known, see, for example, US 5,336,701 and US 5,580,924.

An acrylonitrile-butadiene-styrene composition that provides low gloss, high heat resistance and high impact resistance is desired.

In a first aspect, the present invention is directed to a thermoplastic resin composition that comprises, based on 100 parts by weight of the resin composition, a mixture of:
(a) from 55 parts by weight to 98.5 parts by weight of a rubber modified thermoplastic resin comprising a discontinuous elastomeric phase dispersed in a continuous rigid thermoplastic phase, wherein at least a portion of the rigid thermoplastic phase is chemically grafted to the elastomeric phase;
(b) from 0.5 parts by weight to 15 parts by weight of a gel copolymer;
(c) from 0.5 parts by weight to 15 parts by weight of an epihalohydrin polymer; and
(d) from 0.5 parts by weight to 15 parts by weight of a (meth)acrylate polymer.

The composition of the present invention exhibits improved flow properties, that is, reduced viscosity, compared to analogous compositions that comprise a rubber modified thermoplastic resin and gel copolymer, but that lack the epihalohydrin polymer and (meth)acrylate polymer components of the composition of the present invention. The composition of the present invention is suitable for use as a molding compound for making thermoplastic articles that exhibit low gloss, high heat resistance and improved multiaxial impact performance, compared to articles made from analogous compositions that comprise a rubber modified thermoplastic resin and gel copolymer, but that lack the epihalohydrin polymer and (meth)acrylate polymer components of the composition of the present invention.

In a second aspect, the present invention is directed to a molded thermoplastic article, comprising a mixture of a rubber modified thermoplastic resin, said rubber modified thermoplastic resin comprising a discontinuous elastomeric phase dispersed in a continuous rigid thermoplastic phase, wherein at least a portion of the rigid thermoplastic phase is chemically grafted to the elastomeric phase, a rigid gel copolymer, an epihalohydrin copolymer and a (meth)acrylate polymer.

The molded article of the present invention exhibits low gloss, high heat resistance and improved multiaxial impact performance, to an analogous article comprising a rubber modified thermoplastic resin and gel copolymer, but lacking the epihalohydrin polymer and (meth)acrylate polymer components of the article of the present invention.

### Detailed Description of the Invention

In a preferred embodiment, the composition of the present invention comprises from 60 to 98 parts by weight ("pbw"), more preferably from 70 to 96 pbw, of the rubber modified thermoplastic resin, from 1 to 10 pbw, more preferably from 2 to 8 pbw, of the rigid acrylonitrile gel copolymer, from 1 to 10 pbw, more preferably from 2 to 8 pbw, of the epihalohydrin copolymer and from 1 to 10 pbw, more preferably from 1 to 6 pbw, of the (meth)acrylate polymer.

### Rubber Modified Thermoplastic Resin

The rubber modified thermoplastic resin of the present invention comprises a discontinuous elastomeric phase dispersed in a continuous rigid thermoplastic phase, wherein at least a portion of the rigid thermoplastic phase is chemically grafted to the elastomeric phase. In a preferred embodiment, the rubber modified thermoplastic resin comprises from 5 to 50 pbw, more preferably 5 to 35 pbw, still more preferably 10 to 25 pbw, *of* the elastomeric phase and from 50 to 95 pbw, more preferably 65 to 95 pbw, still more preferably 75 to 90 pbw, of the rigid thermoplastic phase.

### (a) Elastomeric Phase

Suitable materials for use as the elastomeric phase are polymers having a glass transition temperature ("T_{g}") of less than or equal to 25°C, more preferably less than or equal to 0 °C, and still more preferably less than or equal to -30°C. As referred to herein, the T_{g} of a polymer is the T_{g} value of polymer as measured by differential scanning calorimetry (heating rate 20°C/minute, T_{g} value determined at inflection point).

In a preferred embodiment, the elastomeric phase comprises a polymer having structural units derived from one or more monoethylenically unsaturated monomers selected from conjugated diene monomers, non-conjugated diene monomers and (C₁-C₁₂) alkyl (meth)acrylate monomers.

Suitable conjugated diene monomers include, for example, 1,3-butadiene, isoprene, 1,3-heptadiene, methyl-1,3-pentadiene, 2,3-dimethylbutadiene, 2-ethyl-1,3-pentadiene, 1,3-hexadiene, 2,4-hexadiene, dichlorobutadiene, bromobutadiene and dibromobutadiene as well as mixtures of conjugated diene monomers. In a preferred embodiment, the conjugated diene monomer is 1,3-butadiene.

Suitable non-conjugated diene monomers include, for example, ethylidene norbornene, dicyclopentadiene, hexadiene or phenyl norbornene.

As used herein, the term "(C₁-C₁₂)alkyl" means a straight or branched alkyl substituent group having from 1 to 12 carbon atoms per group and includes, for example, methyl, ethyl, n-butyl, sec-butyl, t-butyl, n-propyl, iso-pentyl, pentyl, hexyl, heptyl, octyl, nonyl, decyl, undecyl and dodecyl, and the terminology "(meth)acrylate monomers" refers collectively to acrylate monomers and methacrylate monomers. Suitable (C₁-C₁₂)alkyl (meth)acrylate monomers include (C₁-C₁₂)alkyl acrylate monomers such as, for example, ethyl acrylate, butyl acrylate, iso-pentyl acrylate, n-hexyl acrylate, 2-ethyl hexyl acrylate, and their (C₁-C₁₂)alkyl methacrylate analogs such as, for example, methyl methacrylate, ethyl methacrylate, propyl methacrylate, iso-propyl methacrylate, butyl methacrylate, hexyl methacrylate, decyl methacrylate.

In a preferred embodiment, the elastomeric phase comprises a polymer having first structural units derived from one or more monoethylenically unsaturated monomers selected from conjugated diene monomers, non-conjugated diene monomers and (C₁-C₁₂) alkyl (meth)acrylate monomers and second structural units derived from one or more monoethylenically unsaturated monomers selected from vinyl aromatic monomers, monoethylenically unsaturated nitrile monomers and (C₂-C₈)olefin monomers. Suitable conjugated diene monomers, non-conjugated diene monomers and (C₁-C₁₂) alkyl (meth)acrylate monomers are disclosed above.

Suitable vinyl aromatic monomers include, for example, styrene and substituted styrenes having one or more alkyl, alkoxyl, hydroxyl or halo substituent group attached to the aromatic ring, including, for example, α-methyl styrene, p-methyl styrene, vinyl toluene, vinyl xylene, trimethyl styrene, butyl styrene, chlorostyrene, dichlorostyrene, bromostyrene, p-hydroxystyrene, methoxystyrene and vinyl-substituted condensed aromatic ring structures, such as, for example, vinyl naphthalene, vinyl anthracene, as well as mixtures of vinyl aromatic monomers.

As used herein, the term "monoethylenically unsaturated nitrile monomer" means an acyclic compound that includes a single nitrile group per molecule and a single site of ethylenic unsaturation per molecule and includes, for example, acrylonitrile, methacrylonitrile, α-chloro acrylonitrile, fumaronitrile.

As used herein, the term "(C₂-C₈)olefin monomers" means a compound having from 2 to 8 carbon atoms per molecule and having a single site of ethylenic unsaturation per molecule. Suitable (C₂-C₈)olefin monomers include, for example, ethylene, propene, 1-butene, 1-pentene, heptene.

In a preferred embodiment, the elastomeric phase comprises from 60 to 100 percent by weight ("wt%") first structural units derived from one or more conjugated diene monomers and from 0 to 40 wt% second structural units derived from one or more monomers selected from vinyl aromatic monomers and monoethylenically unsaturated nitrile monomers, such as, for example, a butadiene homopolymer, styrene-butadiene copolymer, an acrylonitrile-butadiene copolymer or a styrene-butadiene-acrylonitrile copolymer.

In an alternative preferred embodiment, the elastomeric phase comprises structural units derived from one or more (C₁-C₁₂)alkyl acrylate monomers. In a more highly preferred embodiment, the rubbery polymeric substrate comprises from 40 to 100 wt% structural units derived from one or more (C₁-C₁₂)alkyl acrylate monomers, more preferably from one or more monomers selected from ethyl acrylate, butyl acrylate and n-hexyl acrylate.

The elastomeric phase may, optionally, further comprise a minor amount, for example, up to 5 wt% of structural units derived from a polyethylenically unsaturated "crosslinking" monomer, for example, butylene diacrylate, divinyl benzene, butene diol dimethacrylate, trimethylolpropane tri(meth)acrylate. As used herein, the term "polyethylenically unsaturated" means having two or more sites of ethylenic unsaturation per molecule.

The elastomeric phase may, particularly in those embodiments wherein the structural units of the elastomeric phase are derived from alkyl (meth)acrylate monomers, further comprise a minor amount, for example, up to 5 wt% of structural units derived from a polyethylenically unsaturated "graftlinking" monomer. Suitable graftlinking monomers include those monomers having a first site of ethylenic unsaturation with a reactivity similar to that of the monoethylenically unsaturated monomers from which respective substrate or superstrate is derived and a second site of ethylenic unsaturation with a relative reactivity that is substantially different from that of the monoethylenically unsaturated monomers from which the elastomeric phase is derived so that the first site reacts during synthesis of the elastomeric phase and the second site is available for later reaction under different reaction conditions, for example, during synthesis of the rigid thermoplastic phase. Suitable graftlinking monomers include, for example, allyl methacrylate, diallyl maleate, triallyl cyanurate.

In a preferred embodiment, the elastomeric phase is made by aqueous emulsion polymerization in the presence of a free radical initiator, for example, an azonitrile initiator, an organic peroxide initiator, a persulfate initiator or a redox initiator system, and, optionally, in the presence of a chain transfer agent, for example, an alkyl mercaptan and coagulated to form particles of elastomeric phase material. In a preferred embodiment, the emulsion polymerized particles of elastomeric phase material have a weight average particle size of 50 to 800 nanometers ("nm"), more preferably, of from 100 to 500 nm, as measured by light transmission. The size of emulsion polymerized elastomeric particles may optionally be increased by mechanical or chemical agglomeration of the emulsion polymerized particles, according to known techniques.

### (b) Rigid Thermoplastic Phase

The rigid thermoplastic resin phase comprises one or more thermoplastic polymers and exhibits a T_{g} of greater than 25°C, preferably greater than or equal to 90°C and even more preferably greater than or equal to 100°C.

In a preferred embodiment, the rigid thermoplastic phase comprises a polymer or a mixture of two or more polymers each having structural units derived from one or more monomers selected from the group consisting of (C₁-C₁₂)alkyl (meth)acrylate monomers, vinyl aromatic monomers and monoethylenically unsaturated nitrile monomers. Suitable (C₁-C₁₂)alkyl (meth)acrylate monomers, vinyl aromatic monomers and monoethylenically unsaturated nitrile monomers are those set forth above in the description of the elastomeric phase.

In a highly preferred embodiment, rigid thermoplastic phase comprises one or more vinyl aromatic polymers. Suitable vinyl aromatic polymers are those comprising at least 50 wt% structural units derived from one or more vinyl aromatic monomers.

In a preferred embodiment, the rigid thermoplastic resin phase comprises a vinyl aromatic polymer having first structural units derived from one or more vinyl aromatic monomers and having second structural units derived from one or more monoethylenically unsaturated nitrile monomers.

The rigid thermoplastic phase is made according to known processes, for example, mass polymerization, emulsion polymerization, suspension polymerization or combinations thereof, wherein at least a portion of the rigid thermoplastic phase is chemically bonded, i.e., "grafted" to the elastomeric phase via reaction with unsaturated sites present in the elastomeric phase. The unsaturated sites in the elastomeric phase are provided, for example, by residual unsaturated sites in structural units derived from a conjugated diene or by residual unsaturated sites in structural units derived from a graftlinking monomer.

In a preferred embodiment, at least a portion of the rigid thermoplastic phase is made by an aqueous emulsion or aqueous suspension polymerization reaction in the presence of elastomeric phase and a polymerization initiator system, for example, a thermal or redox initiator system.

In an alternative preferred embodiment, at least a portion of the thermoplastic phase is made by a mass polymerization process, wherein the particles of the material from which the elastomeric phase is to be formed are dissolved in a mixture of the monomers from which the rigid thermoplastic phase is to be formed and the monomers of the mixture are then polymerized to form the rubber modified thermoplastic resin.

The amount of grafting that takes place between the rigid thermoplastic phase and the elastomeric phase varies with the relative amount and composition of the elastomeric phase. In a preferred embodiment, from 10 to 90 wt%, preferably from 25 to 60 wt%, of the rigid thermoplastic phase is chemically grafted to the elastomeric phase and from 10 to 90 wt%, preferably from 40 to 75 wt% of the rigid thermoplastic phase remains "free", that is, non-grafted.

The rigid thermoplastic phase of the rubber modified thermoplastic resin may be formed solely by polymerization carried out in the presence of the elastomeric phase or by addition of one or more separately polymerized rigid thermoplastic polymers to a rigid thermoplastic polymer that has been polymerized in the presence of the elastomeric phase.

In a preferred embodiment, the nongrafted portion of the rigid thermoplastic phase exhibits a weight average molecular weight in the range of 10,000 to 200,000, as determined by gel permeation chromatography relative to polystyrene.

In a preferred embodiment, the rubber modified thermoplastic resin comprises an elastomeric phase comprising a polymer having structural units derived from one or more conjugated diene monomers, and, optionally, further comprising structural units derived from one or more monomers selected from vinyl aromatic monomers and monoethylenically unsaturated nitrile monomers, and the rigid thermoplastic phase comprises a polymer comprising structural units derived from one or more monomers selected from vinyl aromatic monomers and monoethylenically unsaturated nitrile monomers.

In a preferred embodiment, the rigid thermoplastic resin phase is a polymer or mixture of polymers comprising from 5 to 90 wt% structural units derived from α-methyl styrene, from 5 to 70 wt% structural units derived from styrene and from 5 to 50 wt% structural units derived from acrylonitrile.

In a highly preferred embodiment, the rigid thermoplastic resin phase comprises a mixture of from 20 to 95 wt%, more preferably from 30 to 80 wt%, of a first rigid thermoplastic polymer comprising from 50 to 90 wt% structural units derived from α-methyl styrene, from 10 to 50 wt% structural units derived from acrylonitrile and from 0 to 20 wt% structural units derived from styrene and from 5 to 80 wt%, more preferably from 20 to 70 wt%, of a second rigid thermoplastic polymer comprising from 60 to 85 wt% structural units derived from styrene and from 15 to 40 wt% structural units derived from acrylonitrile.

Each of the polymers of the elastomeric phase and of the rigid thermoplastic resin phase of the rubber modified thermoplastic resin may, provided that the T_{g} limitation for the respective phase is satisfied, optionally further comprise up to 10 wt% of third structural units derived from one or more other copolymerizable monomers such as, for example, monoethylenically unsaturated carboxylic acids such as, for example, acrylic acid, methacrylic acid, itaconic acid, hydroxy(C₁-C₁₂)alkyl (meth)acrylate monomers such as, for example, hydroxyethyl methacrylate; (C₄-C₁₂)cycloalkyl (meth)acrylate monomers such as, for example, cyclohexyl methacrylate; (meth)acrylamide monomers such, for example as, acrylamide and methacrylamide; maleimide monomers such as, for example, N-alkyl maleimides, N-aryl maleimides, maleic anhydride, vinyl esters such as, for example, vinyl acetate and vinyl propionate. As used herein, the term "(C₄-C₁₂)cycloalkyl" means a cyclic alkyl substituent group having from 4 to 12 carbon atoms per group and the term "(meth)acrylamide" refers collectively to acrylamides and methacrylamides

### Gel Copolymer

The gel copolymer of the composition of the present invention comprises the crosslinked reaction product of a reactive polymer and a multifunctional crosslinking agent. The gel copolymer may further comprise non-crosslinked reactive polymer as well as other polymers.

Suitable reactive polymers are those having one or more substituent groups, such as, for example, nitrile groups, carboxylic acid groups, anhydride groups, epoxy groups, amino groups, per molecule that are capable of undergoing reaction with the crosslinking agent to provide a crosslinked gel copolymer.

In a preferred embodiment, the reactive polymer comprises first structural units derived from a least one monoethylenically unsaturated nitrile monomer, preferably acrylonitrile, and further comprises second structural units derived from one or more ethylenically unsaturated comonomers that are copolymerizable with acrylonitrile. Suitable monoethylenically unsaturated nitrile monomers and ethylenically unsaturated monomers are disclosed above. Suitable acrylonitrile copolymers include, for example, styrene-acrylonitrile copolymers, α-methylstyrene-acrylonitrile copolymers, acrylonitrile-styrene-(meth)acrylate graft copolymers, acrylonitrile-ethyl acrylate-styrene copolymers, acrylonitrile-butadiene-styrene graft copolymers.

In a preferred embodiment, the reactive polymer comprises from 5 to 40 wt%, preferably 15 to 35 wt%, structural units derived from a monoethylenically unsaturated nitrile monomer.

In a highly preferred embodiment, the reactive polymer comprises a styrene-acrylonitrile copolymer which comprises from 60 to 90 wt% structural units derived from styrene and from 10 to 40 wt% structural units derived from acrylonitrile.

Suitable multifunctional crosslinking agents are compounds having two or more functional groups, for example, epoxy groups, amino groups, carboxylic acid groups, per molecule that are capable of reacting with the functional groups of the reactive polymer to form the crosslinked gel copolymer. In a preferred embodiment, the crosslinking agent is a polyepoxide.

Suitable polyepoxides include, for example, aliphatic diepoxides such as, for example, dodecatriene dioxide, dipentene dioxide, 1,2,7,8-diepoxy octane; bis(glycidyl ether) compounds such as, for example, polycondensates of epihalohydrin and diols or diacids wherein the diol/diacid may be either aliphatic or aromatic, such as adipic acid and phthallic acid, 1,4-butanediol-diglyddyl ether, bis-glycidyl ether of bisphenol A; cycloaliphatic diepoxides such as, for example, 3,4-epoxycyclohexyl-3,4-epoxycyclohexylcarboxylate, bis(3,4-epoxycydohexylmethyl)adipate, bicycloheptadiene diepoxide; mixed aliphatic and cycloaliphatic diepoxides such as , for example, vinyl cyclobutene dioxide, vinyl cyclopentadiene dioxide, vinyl cyclohexene dioxide, butenecyclobutene dioxide, butenecyclopentene dioxide, butadienecyclobutadiene dioxide, butadienecyclopentadiene dioxide, pentadienecyclobutadiene dioxide; tri and polyepoxides such as, for example, glycidyl ethers of novalaks, tetraglycidyl ether of 1,1,2,2,-tetrakis(4-hyroxyphenyl) ethane, triglycidyl ether of 1,3,6-trihydroxybenzene, triglycidyl isocyanurate (TGIC) and epoxidized oils such as, for example, epoxidized tall oils, epoxidized linseed oils, epoxidized soy bean oils.

In a preferred embodiment, the polyepoxide is an alicyclic polyepoxide. In a highly preferred embodiment, the polyepoxide is 3,4-epoxycyclohexyl-3,4-epoxycyclohexylcarboxylate, available from Union Carbide under the trade designation "Bakelite® ERL 4221".

In preferred embodiments, the proportion of polyepoxide to reactive polymer is from 0.5 to 10 pbw, more preferably from 1 to 6 pbw, of the polyepoxide per 100 pbw reactive polymer.

The reactive polymer and crosslinking agent are melt blended under reactive conditions to form the gel copolymer, for example, in an extruder.

In a preferred embodiment wherein the crosslinking agent comprises a polyepoxide compound, the reactive polymer and polyepoxide compound agent are melt blended in the presence of an epoxide ring-opening catalyst. Suitable epoxide ring opening catalysts include, amines, imidazoles, organic acids, such as carboxylic adds and sulfonic acids, mineral acids and Lewis Acids. In a preferred embodiment, the ring-opening catalyst is zinc chloride or a sulfonic acid such as, for example, methyl sulfonic add, p-toluene sulfonic acid and dodecylbenzene sulfonic acid, most preferably dodecylbenzene sulfonic acid.

In a preferred embodiment, the amount of ring-opening catalyst is about 50 to 2000 pbw catalyst per one million pbw reactive polymer, which may, alternatively, be expressed as 50 to 2000 parts per million ("ppm") catalyst, based on weight of reactive polymer. In a preferred embodiment, the reactive polymer polyepoxide and ring-opening catalyst are each fed into the throat of an extruder and melt blended in the extruder under reactive conditions to form the gel copolymer.

In a preferred embodiment, the melt mixing is carried out in a single screw or twin screw extruder, operated at 150°C - 360°C, preferably 220°C - 350°C, more preferably 220°C - 330°C, and a residence time of 10 - 600 seconds.

Suitable gel copolymers and a method for making such gel copolymers are disclosed in US Patent No. 5,580,924, issued December 3,1996 to R. Wildi et al for "Reduced Gloss Thermoplastic Compositions and Processes For Making Thereof", the disclosure of which is hereby incorporated herein by reference.

In a preferred embodiment, the melt mixing is carried out in the presence of from 0.05 to 1 pbw water per 100 pbw reactive polymer, as disclosed in US. Patent No. 5,336,701 issued August 9, 1994 to R. Wildi et al for "Process Improvement For Improved Color Reduced Gloss Thermoplastic Compositions", the disclosure of which is hereby incorporated herein by reference.

In a highly preferred embodiment, the gel copolymer is made by melt mixing the reactive polymer and a crosslinking agent under reactive conditions and in the presence of an inert carrier polymer, to form a mixture of gel copolymer and inert carrier polymer. A suitable gel copolymer is disclosed in U.S. Patent No. 5,530,062 for "Production Of Low Gloss Additives For Thermoplastic Resins" issued June 25,1996 to R. Bradkte et al, the disclosure of which is hereby incorporated herein by reference.

Suitable inert carrier polymers are those polymers that will not react with the reactive polymer or the crosslinking agent under the reactive extrusion conditions. Suitable inert carrier polymers include, for example, polycarbonate resins such as, for example, bisphenol A polycarbonate resin, polyolefin resins such as, for example, polyethylene, and vinyl aromatic resins such as, for example, polystyrene.

In a preferred embodiment, the inert carrier comprises a polystyrene polymer or a polycarbonate resin.

In a highly preferred embodiment, the inert carrier polymer comprises a bisphenol A polycarbonate resin that exhibits a weight average molecular weight in the range of 10,000 to 100,000, as determined by gel permeation chromatography relative to polystyrene.

In a preferred embodiment, from 1 to 80 pbw, more preferably 30 to 70 pbw, reactive polymer are melt mixed with the crosslinking agent under reactive conditions in the presence of from 20 to 99 pbw, more preferably 30 to 70 pbw, inert carrier polymer.

The compositions of the invention preferably contain gel copolymer in an amount sufficient to reduce the surface gloss of articles molded from the composition and thus enhance the matte finish of the article.

### Epihalohydrin Polymer

The epihalohydrin polymer comprises structural units derived from an epihalohydrin monomer. Suitable epihalohydrin monomers are those according to structural formula (2): 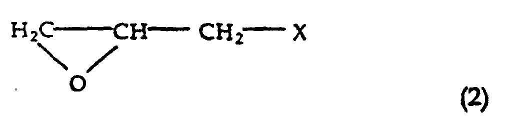 wherein X is chlorine, bromine, iodine or fluorine.

In a preferred embodiment, X is chlorine or bromine. Most preferably, X is chlorine.

Suitable epichlorohydrin monomers include, for example, epichlorohydrin, epibromohydrin, epiiodohydrin and epifluorohydrin. In a preferred embodiment, the epihalohydrin monomer is epichlorohydrin.

The epihalohydrin monomer may be an epihalohydrin homopolymer or an epihalohydrin copolymer. Methods for synthesizing epichlorohydrin homopolymers are known and are described, for example, in U.S. Patent Nos. 3,850,856 and 3,850,857.

The epihalohydrin monomer may be copolymerized with other copolymerizable comonomers. Suitable copolymerizable comonomers include oxirane-containing monomers such as, for example, glycidyl ethers, for example, glycidyl ether, isopropenyl glycidyl ether, phenyl glycidyl ether; monoepoxides of dienes and polyenes, such as, for example, butadiene monoxide, chloroprene monoxide, 3,4-epoxy-1-pentene; glycidyl esters such as, for example, glycidyl acrylate, glycidyl methacrylate, 1,2-epoxy 1,2-epoxy-3,3,3-trichloropropane; and alkylene oxides such as, for example, ethylene oxide, propylene oxide and trichlorobutylene oxide. Methods for synthesizing epihalohydrin copolymers are known and are described, for example, in U.S. Patent No 4,251,648.

In a preferred embodiment, the epihalohydrin polymer is a copolymer of an epichlorohydrin and an alkylene oxide. More preferably, the epichlorohydrin polymer is a copolymer of epichlorohydrin and ethylene glycol or propylene glycol.

In a preferred embodiment, the epihalohydrin polymer comprises from 5 to 95 wt% first structural units derived from one or more epihalohydrin monomers and from 5 to 95 wt% second structural units derived from one or more copolymerizable comonomers.

### (Meth)acrylate Polymer

The (meth)acrylate polymer is polymer having structural units derived from one or more (C₁-C₁₂)alkyl (meth)acrylate monomers, optionally including up to 10 wt% structural units derived from other copolymerizable monoethylenically unsaturated comonomers. Suitable (C₁-C₁₂)alkyl (meth)acrylate monomers and comonomers are disclosed above.

In a preferred embodiment, the acrylate polymer is a copolymer having greater than 50 wt% structural units derived from methyl methacrylate.

### Additives

The thermoplastic resin composition of the present invention may optionally also contain various conventional additives, such as:
(1) antioxidants, such as, for example, organophosphites , for example, tris(nonyl-phenyl)phosphite, (2,4,6-tri-tert-butylphenyl)(2-butyl-2-ethyl-1,3-propanediol)phosphite, bis(2,4-di-t-butylphenyl)pentaerythritol diphosphite or distearyl pentaerythritol diphosphite, as well as alkylated monophenols, polyphenols, alkylated reaction products of polyphenols with dienes, such as, for example, butylated reaction products of para-cresol and dicyclopentadiene, alkylated hydroquinones, hydroxylated thiodiphenyl ethers, alkylidene-bisphenols, benzyl compounds, acylaminophenols, esters of beta-(3,5-di-tert-butyl-4-hydroxyphenol)-propionic acid with monohydric or polyhydric alcohols, esters of beta-(5-tert-butyl-4-hydroxy-3-methylphenyl)-propionic add with monohydric or polyhydric alcohols, esters of beta-(5-tert-butyl-4-hydroxy-3-methylphenyl) propionic acid with mono-or polyhydric alcohols, esters of thioalkyl or thioaryl compounds, such as, for example, distearylthiopropionate, dilaurylthiopropionate, ditridecylthiodipropionate, amides of beta-(3,5-di-tart-butyl-4-hydroxyphenol)-propionic add;
(2) UV absorbers and light stabilizers such as, for example, (i) 2-(2'-hydroxyphenyl)-benzotriazoles, 2-hydroxy-benzophenones; (ii) esters of substituted and unsubstituted benzoic acids, (iii) acrylates, (iv) nickel compounds;
(3) metal deactivators, such as, for example, N,N'-diphenyloxalic acid diamide, 3-salicyloylamino-1,2,4-triazole;
(4) peroxide scavengers, such as, for example, (C₁₀-C₂₀)alkyl esters of β-thiodipropionic acid, mercapto benzimidazole;
(5) polyamide stabilizers;
(6) basic co-stabilizers, such as, for example, melamine, polyvinylpyrrolidone, triallyl cyanurate; urea derivatives, hydrazine derivatives; amines, polyamides, polyurethanes;
(7) sterically hindered amines such as, for example, triisopropanol amine or the reaction product of 2,4-dichloro-6-(4-morpholinyl)-1,3,5-triazine , with a polymer of 1,6-diamine, N, N'-bis(-2,2,4,6-tetramethyl-4-piperidenyl) hexane;
(8) neutralizers such as magnesium stearate, magnesium oxide, zinc oxide, zinc stearate, hydrotalcite;
(9) fillers and reinforcing agents, such as, for example, silicates, TiO₂ glass fibers, carbon black, graphite, calcium carbonate, talc, mica;
(10) other additives such as, for example, lubricants such as , for example, pentaerythritol tetrastearate, EBS wax, silicone fluids, plasticizers, optical brighteners, pigments, dyes, colorants, flameproofing agents; anti-static agents; blowing agents;
(11) flame retardant additives such as, for example, halogen-containing organic flame retardant compounds, organophosphate flame retardant compounds and borate flame retardant compounds.

The thermoplastic resin composition of the present invention is made, for example, by melt mixing the components, for example, in a two-roll mill, in a Banbury mixer or in a single screw or twin-screw extruder, mixing the components to produce a substantially homogeneous composition and optionally, reducing the composition so formed to particulate form, for example, by pelletizing or grinding the composition.

The composition of the present invention can be molded into useful articles, for example, automotive interior components, by a variety of means such as injection, extrusion, rotation, and blow molding and thermoforming.

### Comparative Examples C1 and C2 and Examples 1 and 2

The compositions of Comparative Examples C1 and C2 and Examples 1 and 2 were made by combining the components set forth in TABLE 1, in the relative amounts indicated in TABLE 1, in a Banbury compounder. Comparative Example C1 is a control, Comparative Example C2 includes a gel copolymer, but lacks the epihalohydrin polymer and a (meth)acrylate polymer components of the composition of the present invention and Examples 1 and 2 are embodiments of the present invention. The following components were used to make the compositions of Comparative Examples C1 and C2 and Examples 1 and 2:
- ABS1:: ABS graft copolymer comprising 50 pbw rubber (15 styrene/85 butadiene, 85 nm average particle size) and 50 pbw SAN copolymer (75 styrene/25 acrylonitrile);
- ABS2:: ABS graft copolymer comprising 50 pbw rubber (15 styrene/85 butadiene, 300 nm average particle size) and 50 pbw SAN copolymer (75 styrene /25 acrylonitrile);
- AMSAN:: AMSAN copolymer (70α-methyl styrene/30 acrylonitrile);
- SAN:: SAN copolymer (75 styrene/25 acrylonitrile);
- EHH:: epihalohydrin polymer (Hydrin 2000, Nippon Zeon Chemicals, Inc.);
- PMMA:: poly(methyl methacrylate) (V 920, Rohm and Haas Company);
- GEL 1:: 100 pbw SAN copolymer (75 styrene/25 acrylonitrile) crosslinked with 3.5 pbw 3,4-epoxycydohexyl-3,4-epoxycydohexylcarboxylate (Bakelite® ERL 4221, Union Carbide Corporation) under melt extrusion conditions in the presence of 50 pbw bisphenol A polycarbonate resin and 1200 ppm, based on the weight of SAN copolymer, of dodecylbenzene sulfonic acid;
- GEL 2:: 100 pbw SAN copolymer (75 styrene/25 acrylonitrile) crosslinked with 4 pbw 3,4-epoxycydohexyl-3,4-epoxycyclohexylcarboxylate (Bakelite® ERL 4221, Union Carbide Corporation) under melt extrusion conditions in the presence of 950 ppm, based on the weight of SAN copolymer, of dodecylbenzene sulfonic acid;
- Lubricant 1:: magnesium oxide;
- Lubricant 2:: EBSwax;
- Lubricant 3:: block copolymer of propylene oxide and ethylene oxide (Pluronic F88, BASF).

The compositions were then ground in a grinder and each of the ground compositions was then injection molded at 500°F, 0.8 inches/second injection speed into a 150°F mold to form samples for testing. The samples were tested according to the following methods: viscosity was measured using a capillary rheometer, notched impact Izod performance was measured according to ASTM D256, falling dart impact properties were measured using an instrumented impact apparatus (Dynatup) with a ½ inch diameter dart, tensile strength and elongation were measured according to ASTM D 638, heat distortion temperature was measured according to ASTM D 648-82 at 66 pounds per square inch ("psi") using a 1/8 inch thick injection molded sample, flexural strength and flexural modulus were measured according to ASTM D790 and gloss properties were measured according to ASTM D523.

Results are set forth in TABLE 1 as Viscosity in Poise ("P") at 500°F and shear rates of 100 s⁻¹, 500 s⁻¹ and 1000 s⁻¹, Notched Izod impact strength in foot-pounds per inch ("ft-lb/in"), falling dart failure energy and total energy, each in foot-pounds ("ft-lb") as well as standard deviation values, heat distortion temperature ("HDT (°F)"), tensile strength, flexural strength and flexural modulus in pounds per square inch ("psi"), tensile elongation as % of initial length ("%"), and gloss in at 60° and 85°.

**TABLE 1**

| COMPONENT | C1 | C2 | 1 | 2 |
|---|---|---|---|---|
| ABS1 | 35.0 | --- | --- | --- |
| ABS2 | --- | 35.0 | 35.0 | 35.0 |
| AMSAN | 40.0 | 40.0 | 32.4 | 32.4 |
| SAN | 25.0 | 25.0 | 20.3 | 20.3 |
| EHH | --- | --- | 5.0 | 5.0 |
| PMMA | --- | --- | 3.3 | 3.3 |
| GEL 1 | --- | 2.0 | 4.0 | -- |
| GEL2 | --- | --- | --- | 4.0 |
| Lubricant 1 | 0.05 | --- | --- | --- |
| Lubricant 2 | 1.0 | --- | 1.0 | 1.0 |
| Lubricant 3 | 0.25 | 0.25 | --- | --- |

| PROPERTIES | | | | |
|---|---|---|---|---|
| Viscosity (P) | | | | |
| 500°F, 100 s⁻¹ | 9953 | 7064 | 5286 | 5938 |
| 500°F, 500 s⁻¹ | 3549 | 3152 | 2242 | 2407 |
| 500°F, 1000 s⁻¹ | 2276 | 2113 | 1550 | 1631 |
| | | | | |
| Notched Izod (ft-lb/in) | 4.7 | 2.5 | 5.5 | 4.6 |
| | | | | |
| Falling Dart: | | | | |
| Failure Energy (ft-lb) | 28.9 | 4.7 | 26.0 | 23.4 |
| Standard Deviation | 6.2 | 1.9 | 3.2 | 5.4 |
| Total Energy (ft-lb) | 29.8 | 9.6 | 30.4 | 28.6 |
| Standard Deviation | 6.0 | 11.4 | 3.7 | 3.2 |
| | | | | |
| HDT (°F) | 210 | -- | 204 | 204 |
| Tensile Strength (psi) | 6145 | --- | --- | 5925 |
| Tensile Elongation (%) | 26 | --- | --- | 19 |
| Flex Strength (psi) | 10780 | --- | 9430 | 9560 |
| Flex Modulus (psi) | 3.77 | --- | 336 | 3.46 |
| Gloss (60°) | 30 | 68 | 20.2 | 18.2 |
| Gloss (85°) | 85.5 | --- | 50.4 | 39.8 |

Use of the gel copolymer as a gloss reducing additive in an acrylonitrfle-butadiene-styrene resin composition provides gloss reduction, but at the expense of severely compromised impact properties (compare results for Comparative Example C2 with Comparative Example C1). The composition of the present invention unexpectedly exhibits even lower gloss (compare results for Examples 1 and 2 with Comparative Examples C1 and C2) and unexpectedly exhibits dramatically improved impact performance (compare results for Examples 1 and 2 with Comparative Example C2) that nearly matches the control composition (compare results for Examples 1 and 2 with Comparative Example C1).

## Claims

1. A thermoplastic resin composition comprising, based on 100 parts by weight of the resin composition, a mixture of:
(a) from 55 parts by weight to 98.5 parts by weight of a rubber modified thermoplastic resin comprising a discontinuous elastomeric phase dispersed in a continuous rigid thermoplastic phase, wherein at least a portion of the rigid thermoplastic phase is chemically grafted to the elastomeric phase;
(b) from 0.5 parts by weight to 15 parts by weight of a rigid gel copolymer;
(c) from 0.5 parts by weight to 15 parts by weight of an epihalohydrin polymer; and
(d) from 0.5 parts by weight to 15 parts by weight of a (meth)acrylate polymer.

2. The composition of claim 1, wherein the rubber modified thermoplastic resin comprises from 5 parts by weight to 50 parts by weight elastomeric phase and from 50 parts by weight to 95 parts by weight of the rigid thermoplastic phase.

3. The composition of claim 1, wherein the elastomeric phase comprises a butadiene homopolymer, a styrene-butadiene copolymer, an acrylonitrile-butadiene copolymer or a styrene-butadiene-acrylonitrile copolymer.

4. The composition of claim 1, wherein the rigid thermoplastic resin phase is a polymer or mixture of polymers comprising from 5 weight percent to 90 weight percent structural units derived from α-methyl styrene, from 5 weight percent to 70 weight percent structural units derived from styrene and from 5 weight percent to 50 weight percent structural units derived from acrylonitrile.

5. The composition of claim 1, wherein the gel copolymer comprises the crosslinked reaction product of a styrene-acrylonitrile copolymer and a polyepoxide crosslinking agent.

6. The composition of claim 5, wherein the gel copolymer further comprises an inert carrier polymer selected from polycarbonate resins and polystyrene homopolymers.

7. The composition claim 1, wherein the epihalohydrin polymer is a copolymer derived from an epichlorohydrin monomer and an alkylene oxide monomer.

8. The composition claim 1, wherein the (meth)acrylate copolymer comprises greater than or equal to 50 weight percent structural units derived from methyl methacrylate.

9. A molded thermoplastic article, comprising a mixture of a rubber modified thermoplastic resin, said rubber modified thermoplastic resin comprising a discontinuous elastomeric phase dispersed in a continuous rigid thermoplastic phase, wherein at least a portion of the rigid thermoplastic phase is chemically grafted to the elastomeric phase, a rigid gel copolymer, an epihalohydrin polymer and a (meth)acrylate polymer.

## Patentansprüche

1. Thermoplastische Harzzusammensetzung, umfassend, bezogen auf 100 Gewichtsteile der Harzzusammensetzung, eine Mischung von:
(a) 55 Gewichtsteilen bis 98,5 Gewichtsteilen eines Kautschuk-modifizierten thermoplastischen Harzes, das eine nicht zusamenhängende elastomere Phase umfasst, die in einer zusammenhängenden harten thermoplastischen Phase dispergiert ist, wobei mindestens ein Teil der harten thermoplastischen Phase chemisch auf die elastomere Phase gepfropft ist;
(b) 0,5 Gewichtsteilen bis 15 Gewichtsteilen eines harten Gelcopolymers;
(c) 0,5 Gewichtsteilen bis 15 Gewichtsteilen eines Epihalohydrin-Polymers und
(d) 0,5 Gewichtsteilen bis 15 Gewichtsteilen eines (Meth)acrylatpolymers.

2. Zusammensetzung nach Anspruch 1, worin das Kautschuk-modifizierte thermoplastische Harz von 5 Gewichtsteile bis 50 Gewichtsteile elastomere Phase und von 50 Gewichtsteile bis 95 Gewichtsteile von der harten thermoplastischen Phase umfasst.

3. Zusammensetzung nach Anspruch 1, worin die elastomere Phase ein Butadien-Homopolymer, ein Styrol-Butadien-Copolymer, ein Acrylnitril-Butadien-Copolymer oder ein Styrol-Butadien-Acrylnitril-Copolymer umfasst.

4. Zusammensetzung nach Anspruch 1, worin die harte thermoplastische Harzphase ein Polymer oder eine Mischung von Polymeren ist, umfassend von 5 Gew.-% bis 90 Gew.-% strukturelle Einheiten von α-Methylstyrol, von 5 Gew.-% bis 70 Gew.-% strukturelle Einheiten von Styrol und von 5 Gew.-% bis 50 Gew.-% strukturelle Einheiten von Acrylnitril.

5. Zusammensetzung nach Anspruch 1, worin das Gelcopolymer das vernetzte Reaktionsprodukt eines Styrol-Acrylnitril-Copolymers und eines Polyepoxid-Vernetzungsmittels umfasst,

6. Zusammensetzung nach Anspruch 5, worin das Gelcopolymer weiter ein inertes Trägerpolymer, ausgewählt aus Polycarbonatharzen und Polystyrol-Homopolymeren, umfasst.

7. Zusammensetzung nach Anspruch 1, worin das Epihalohydrin-Polymer ein Copolymer von einem Epichlorhydrin-Monomer und einem Alkylenoxid-Monomer ist.

8. Zusammensetzung nach Anspruch 1, worin das (Meth)acrylat-Copolymer 50 Gew.-% oder mehr strukturelle Einheiten von Methylmethacrylat umfasst.

9. Geformter thermoplastischer Gegenstand, umfassend eine Mischung eines Kautschukmodifizierten thermoplastischen Harzes, wobei das Kautschuk-modifizierte thermoplastische Harz eine nicht zusammenhängende elastomere Phase dispergiert in einer zusammenhängenden harten thermoplastischen Phase umfasst, wobei mindestens ein Teil der harten thermoplastischen Phase chemisch auf die elastomere Phase gepfropft ist, ein hartes Gelpolymer, ein Epihalohydripolymer und ein (Meth)acrylatpolymer.

## Revendications

1. Composition de résine thermoplastique comprenant, par rapport à 100 parties en poids de la composition de résine, un mélange de
(a) 55 parties en poids à 98,5 parties en poids d'une résine thermoplastique modifiée par un caoutchouc, comprenant une phase élastomère discontinue dispersée dans une phase thermoplastique rigide continue, dans laquelle au moins une partie de la phase thermoplastique rigide est chimiquement greffée sur la phase élastomère ;
(b) 0,5 partie en poids à 15 parties en poids d'un copolymère gel rigide ;
(c) 0,5 partie en poids à 15 parties en poids d'un polymère d'épihalogénhydrine ; et
(d) 0,5 partie en poids à 15 parties en poids d'un polymère de (méth)acrylate.

2. Composition selon la revendication 1, dans laquelle la résine thermoplastique modifiée par un caoutchouc comprend 5 parties en poids à 50 parties en poids de la phase élastomère, et 50 parties en poids à 95 parties en poids de la phase thermoplastique rigide.

3. Composition selon la revendication 1, dans laquelle la phase élastomère comprend un homopolymère de butadiène, un copolymère styrène/butadiène, un copolymère acrylonitrile/butadiène ou un copolymère styrène/butadiène/acrylonitrile.

4. Composition selon la revendication 1, dans laquelle la phase de résine thermoplastique rigide est un polymère ou un mélange de polymères comprenant de 5 % en poids à 90 % en poids de motifs structuraux dérivés de l'α-méthylstyrène, de 5 % en poids à 70 % en poids de motifs structuraux dérivés du styrène, et de 5 % en poids à 50 % en poids de motifs structuraux dérivés de l'acrylonitrile.

5. Composition selon la revendication 1, dans laquelle le copolymère gel comprend le produit réactionnel réticulé d'un copolymère styrène/acrylonitrile et d'un agent de réticulation polyépoxydé.

6. Composition selon la revendication 5, dans laquelle le copolymère gel comprend en outre un polymère support inerte choisi. parmi les résines polycarbonates et les homopolymères polystyrène.

7. Composition selon la revendication 1, dans laquelle le polymère d'épihalogénhydrine est un copolymère dérivé d'une épihalogénhydrine monomère et d'un oxyde d'alkylène monomère.

8. Composition selon la revendication 1, dans laquelle le copolymère de (méth)acrylate comprend une proportion supérieure ou égale à 50 % en poids de motifs structuraux dérivés du méthacrylate de méthyle.

9. Article thermoplastique moulé, comprenant un mélange d'une résine thermoplastique modifiée par un caoutchouc, ladite résine thermoplastique modifiée par un caoutchouc comprenant une phase élastomère discontinue dispersée dans une phase thermoplastique rigide continue, dans laquelle au moins une partie de la phase thermoplastique rigide est chimiquement greffée à la phase élastomère, d'un copolymère gel rigide, d'un polymère d'épihalogénhydrine et d'un polymère de (méth)acrylate.
